# EUROPEAN PATENT APPLICATION

(11) **EP 4 597 416 A1**
(43) Date of publication of application: **06.08.2025**
(21) Application number: 24154913.8
(22) Date of filing: 31.01.2024
(51) Int. Cl.: G06T 5/60, G06T 5/70, G06T 5/73

(54) **IMAGE ENHANCEMENT**

(71) Applicant: Koninklijke Philips N.V., 5656 AG Eindhoven (NL)
(72) Inventor: WUELKER, Christian, 5656 AG Eindhoven (NL); SOSSIN, Artur, 5656 AG Eindhoven (NL); GRASS, Michael, 5656 AG Eindhoven (NL)
(74) Representative: Philips Intellectual Property & Standards

(57) **Abstract**

A method for image enhancement. The method comprises decomposing an image-to-be-enhanced using multi-scale decomposition such as Laplace pyramid decomposition and application of image degradation detection at each individual level of the decomposition. These degradation estimates at each different level can be used in combination to achieve enhancement of the original image, either by combining them and subtracting them from the original image, or by subtracting them from each decomposition level and then reconstructing a full resolution image. By performing the enhancement at multiple scales, spatial correlation of the degradation features, e.g. noise, is broken down and the resultant enhancement, e.g. denoising, is improved.

## Description

### FIELD OF THE INVENTION

This invention relates to the field of image enhancement.

### BACKGROUND OF THE INVENTION

Denoising images can be a challenging task in cases where the noise is spatially correlated in nature. Spatially correlated noise is a significant factor in particular in digital x-ray (DXR) imaging.

Digital x-ray (DXR) systems offer high spatial resolution and fast exam times. As with other x-ray modalities, image quality of an image is correlated with radiation dose. Higher doses result in higher image quality.

State of the art DXR detectors require effective doses in range 10-100 µSv for most examinations to produce high quality images. However, fine detail can sometimes be lost due to noise, especially for examinations with larger or very young patients. This can hamper timely and accurate diagnosis.

The noise in DXR images is relatively complex due to its spatially correlated nature and therefore not trivial to remove. The noise pattern often locally overlaps with fine structure, making the separation between noise and signal non-trivial. Denoising such data is challenging for standard image denoising algorithms which perform best for uncorrelated noise. Iterative statistical schemes offer better performance, but at the cost of longer processing times and potentially diminished overall image appearance.

To address DXR noise, best performance is achieved using an approach which leverages prior knowledge. Such a method assists in facilitating noise/structure separation.

Artificial Intelligence (Al) methods based on deep convolutional neural networks (CNNs) are known to be applied in other scenarios for denoising. Such algorithms are capable of dealing with a variety of noise types due to their capacity to learn complex priors.

Self-supervised learning with CNNs lends itself well to the near real-time processing requirements for DXR images. In this case the neural network is trained off-line and, during run-time, only inference is performed. The inference is generally very fast for a single image.

A key challenge for CNN-based denoisers lies in adequate training data generation. For training, typically a large number of noiseless and noisy image pairs are required in order to ensure adequate network generalization.

### SUMMARY OF THE INVENTION

The invention is defined by the claims.

According to examples in accordance with an aspect of the invention, there is provided a method for image enhancement, comprising: receiving an image-to-be-enhanced; applying multi-scale image decomposition to the image to yield a set of component images, each component image representing a different decomposition level; estimating image degradation in each of at least a plurality of the component images; and generating an enhanced image by operating on the original image and/or the component images using the degradation estimations to yield an enhanced version of the original image.

Denoising images can be a challenging task in cases where the noise is spatially correlated in nature. Spatially correlated noise is a significant factor in particular in digital x-ray images.

Embodiments of the present invention are based on the concept of performing multi-scale image decomposition (e.g. Laplace pyramid decomposition) of an image-to-be-enhanced and applying image enhancement at a multi-scale level. The different layers of the Laplace pyramid represent different resolution levels of the image. By individually determining noise or other image degradation at the different resolution levels of the decomposition of the image, this helps to overcome difficulties of spatially correlated noise and improves the overall image enhancement. The same principle applies also for other forms of image degradation such as blurring.

In some embodiments, the multi-scale image decomposition is a Laplace pyramid decomposition. This may be achieved e.g. by performing Gaussian pyramid decomposition followed by Laplace pyramid decomposition.

In some embodiments, generating the enhanced image comprises combining the image degradation estimates for the at least plurality of component images and subtracting the combined image degradation estimates from the original image-to-be-enhanced.

Alternatively, in some embodiments, generating the enhanced image comprises, for each of at least a subset of the component images, subtracting the corresponding image degradation estimate from the respective component image to yield a set of enhanced component images, and reconstructing an enhanced image from the enhanced component images. Reconstructing an enhanced image means reconstructing an image with the resolution level of the original image-to-be-enhanced using well known multi-scale reconstruction.

In some embodiments, the image degradation estimate for each component image comprises an estimate of one or both of image noise and image blur. In other words, the image enhancement achieved by the method is denoising and/or deblurring.

In some embodiments, the estimating the image degradation of each component image comprises application of a trained neural network.

In some embodiments, the trained neural network is a neural network trained in a supervised learning procedure using pairs of images, wherein each pair of images includes a first image and a second image, wherein the second image represents an image degradation residuum of the first image. The first image of each pair forms the training input image and the second image of each pair forms a training output image (or target image or ground truth image).

Alternatively, the second image may be a degraded version of the first image.

The first image of each pair is an input image and the second image of each pair is a ground truth image.

The term "degradation residuum" refers to the residual or the difference between an original image and its degraded version. For example, the "degradation residuum" may represent the elements or features that are lost or altered due to the degradation process. For example, if the original image is a clear, high-resolution photograph, and the degraded version is a blurry or noisy version of the same photograph, the degradation residuum would be the details and clarity lost in the transition from the original to the degraded image.

`Degraded' means that the second image has more image degradation features than the first image, e.g. noise or blur.

In some embodiments, the image degradation residuum of each second image represents one or both of a noise or blur residuum of the first image.

For example, one or both of the images of each pair could be synthetic, e.g. generated artificially with a model. In some examples, the first image is a synthetic 'clean' image and the second image is generated by applying a noise generation function or model to the first image. In other examples, the second image could be a natural noisy image and the first image is generated by applying a denoiser to the second image.

In some embodiments, the step of estimating an image degradation of each component image comprises applying to each different component image a different respective trained neural network.

In other words, the method may comprise applying to each different level of the decomposition, a different respective trained neural network. Each different trained neural network may be optimized in its training for application to images at said particular decomposition level.

Each of the different respective trained neural networks is optimized for estimating the image degradation of a particular different decomposition level. Each may be trained using image pairs corresponding to a particular decomposition level, e.g. a particular resolution level.

In some embodiments, where a neural network is used to generate the image degradation estimate, for each pair of images of the training data, the second image may be generated by a process comprising: applying multi-scale decomposition to the first image to yield a set of component images of the first image; and applying an image degradation operation to each component image to yield a synthetic image degradation residuum for each component image.

The image degradation operation may for example be a noise generating function and/or a blur generating function.

By way of example, the noise generating function may comprise a second order or higher polynomial function.

Preferably, a separate respective neural network is trained for use in estimating a degradation residuum of each of at least a plurality of different levels of the decomposition. In other words, different neural networks are optimized in their training for use in estimating the degradation component of each different level of the decomposition.

In some embodiments, the enhanced image is a denoised image, and wherein the method further comprises, subsequent to generating the enhanced image, applying a de-blurring operation. In some embodiments, the deblurring operation comprises applying a trained neural network to the denoised image.

In some embodiments, the images are medical images. The medical images may be x-ray images, for example digital x-ray images, CT images, and/or fluoroscopy images.

Another aspect of the invention is a computer program product comprising machineexecutable code configured, when run on a processor, to cause the processor to perform a method in accordance with any embodiment described in this disclosure or in accordance with any claim of this application.

Another aspect of the invention is a processing device comprising one or more processors configured to perform a method in accordance with any embodiment described in this disclosure or in accordance with any claim if this application.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 outlines steps of an example method in accordance with one or more embodiments of the invention;
Fig. 2 is a block diagram of an example processing device and system in accordance with one or more embodiments of the invention;
Fig. 3 schematically illustrates multi-scale image decomposition;
Fig. 4 schematically illustrates the application of a neural network to each decomposition level of a multi-scale image decomposition; and
Fig. 5 schematically illustrates an exemplary image enhancement operation using noise estimates.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a method for image enhancement. The method comprises decomposing an image-to-be-enhanced using multi-scale decomposition such as Laplace pyramid decomposition and application of image degradation detection at each individual level of the decomposition. These degradation estimates at each different level can be used in combination to achieve enhancement of the original image, either by combining them and subtracting them from the original image, or by subtracting them from each decomposition level and then reconstructing a full resolution image. By performing the enhancement at multiple scales, spatial correlation of the degradation features, e.g. noise, is broken down and the resultant enhancement, e.g. denoising, is improved.

One advantageous application for embodiments of the present invention is for use in denoising digital X-ray (DXR) images or Computer Tomography (CT) images.

In preferred embodiments, the image degradation estimation is performed using one or more artificial neural networks, e.g. convolutional neural networks (CNNs). In some embodiments, a separate neural network may be trained for application to each of a plurality of different decomposition levels of the multi-scale decomposition.

For such supervised CNN learning, image pairs of noisy and corresponding noiseless (or low noise) images may be used. Instead of noisy and noiseless images, a baseline image (which might be referred to as a noiseless image) and an image representing the noise residual may be used. To generate the training data, it is proposed for example to leverage a statistical noise model to generate estimations of image noise for each noiseless image. The training may be performed at a multi-scale level, i.e. by training a separate neural network to infer an estimate of image degradation at each different decomposition level. Each different trained neural network may then be applied to a different level of the decomposition during inference.

Embodiments of the invention are based on the realization of the inventors that statistical noise characteristics are simplified within individual levels of a multi-scale decomposition as compared to within the original (not decomposed) image. For example, the noise may take the form of uncorrelated Gaussian noise. This motivates performing image enhancement using an analysis performed at multiple individual scale levels.

The multi-scale decomposition may take the form of the well-known Laplacian pyramid decomposition.

Thus, in accordance with one set of embodiments, it is proposed to use a dedicated degradation (e.g. noise) inference CNN at each layer of a multi-scale decomposition of an image-to-be enhanced. Each degradation inference CNN may either estimate a degradation (e.g. noise) of the image at a particular level or may infer an enhanced image. A single CNN may be used for all layers, or a separate CNN may be used for each respective layer.

In some embodiments, each neural network generates an estimate of the noise of each decomposition level of the image-to-be-enhanced, and wherein the method comprises generating an enhanced image by blending back the different noise estimates into the original image (subtractively). Optionally, the different noise estimates may be blended into the original image with different strengths or weightings depending upon the decomposition level to which the noise estimate belongs. The different weightings of the blending could be determined by a user. In this way, the denoising can be fine-tuned to accommodate any user in their preference for different denoising strengths, and provide for a noise texture more similar to that of an actual higher-dose image.

By way of summary, according to one specific set of embodiments, there may be provided a system utilizing an AI-method to denoise images, e.g. DXR images. By way of example, a system may comprise any combination of one or more of the following components:
- a digital x-ray (DXR) system;
- an AI-denoising module for DXR images based on multi-scale decomposition of the input image to be denoised;
- a method for training and/or generating training data for the AI module.

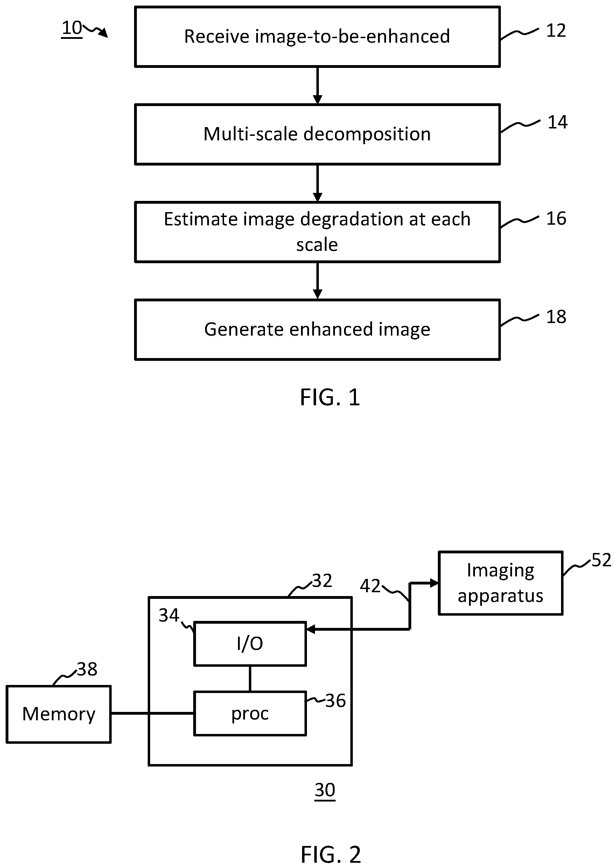

Fig. 1 outlines in block diagram form steps of an example method according to one or more embodiments. The steps will be recited in summary, before being explained further in the form of example embodiments.

Provided is a method 10 for image enhancement.

The method 10 comprises receiving 12 an image-to-be-enhanced. The method further comprises applying 14 multi-scale image decomposition to the image to yield a set of component images, each component image representing a different decomposition level.

The method 10 further comprises estimating 16 image degradation in each of at least a plurality of the component images, i.e. estimating an image degradation at each of at least a plurality of the decomposition levels.

The method 10 further comprises generating 18 an enhanced image by operating on the original image and/or the component images using the degradation estimations to yield an enhanced version of the original image.

As noted above, the method can also be embodied in hardware form, for example in the form of a processing device which is configured to carry out a method in accordance with any example or embodiment described in this document, or in accordance with any claim of this application.

To further aid understanding, Fig. 2 presents a schematic representation of an example processing device 32 configured to execute a method in accordance with one or more embodiments of the invention. The processing device is shown in the context of a system 30 which comprises the processing device. The processing device alone represents an aspect of the invention. The system 30 is another aspect of the invention. The provided system need not comprise all the illustrated hardware components; it may comprise only a subset of them.

The processing device 32 comprises one or more processors 36 configured to perform a method in accordance with that outlined above, or in accordance with any embodiment described in this document or any claim of this application. In the illustrated example, the processing device further comprises an input/output 34 or communication interface.

In the illustrated example of Fig. 2, the system 30 further comprises an imaging apparatus 52, for example a digital x-ray (DXR) imaging apparatus or a CT imaging apparatus.

The system 30 may further comprise a memory 38 for storing computer program code (i.e. computer-executable code) which is configured for causing the one or more processors 36 of the processing device 32 to perform the method as outlined above, or in accordance with any embodiment described in this disclosure, or in accordance with any claim.

As mentioned previously, the invention can also be embodied in software form. Thus another aspect of the invention is a computer program product comprising computer program code configured, when run on a processor, to cause the processor to perform a method in accordance with any example or embodiment of the invention described in this document, or in accordance with any claim of this patent application.

As discussed above, the method involves applying multi-scale decomposition to the original image-to-be-enhanced.

Multi-scale decomposition in image processing is a technique used to analyze images at different scales or resolutions. The basic concept of multi-scale decomposition is to create a series of images, each representing an original image at a different scale or level of detail. This may in general be achieved by repeatedly smoothing and subsampling the image, which results in a set of images ranging from coarse (low resolution) to fine (high resolution) scales. Some example types of multi-scale decomposition include pyramid decomposition, wavelet decomposition, Gaussian pyramid decomposition, and Laplacian Pyramid decomposition.

In general, in pyramid decomposition: the image is recursively reduced in size, usually by a factor of 2 each time, to create a stack of progressively smaller images, notionally forming a pyramid shape. Each level of the pyramid represents the image at a different scale.

Gaussian pyramid decomposition is type of pyramid decomposition in which each level is formed by smoothing the image with a Gaussian filter and then subsampling. This process is repeated to generate a series of reduced images.

Laplacian pyramid decomposition is a more sophisticated form of pyramid decomposition. In the Laplacian pyramid, each level is formed by subtracting levels of a Gaussian pyramid decomposition from one another. This therefore emphasizes the differences (edges) between scales. The process involves creating a Gaussian pyramid first and then using it to construct the Laplacian pyramid.

In particular, for performing a Laplace pyramid decomposition, a first step is to create a Gaussian pyramid by repeatedly applying a Gaussian blur and downsampling the image. Once the Gaussian pyramid is constructed, for each given level in the Gaussian pyramid, a subsequent level is interpolated back to a same scale size as the given level and subtracted from the given level. Each resulting difference image forms a level of the Laplacian pyramid. Each level of the Laplacian pyramid represents the image details lost at the next level of the Gaussian pyramid.

Each level of the Laplacian pyramid highlights features lost due to smoothing at that scale. For instance, the first level shows the finest details (such as edges), and the subsequent levels represent progressively coarser details.

It is possible to reconstruct the original image from the Laplacian pyramid by starting from the smallest image, up-sampling it, and adding it back to the next level of the pyramid. This process is repeated until the largest level is reached, this corresponding to the original image.

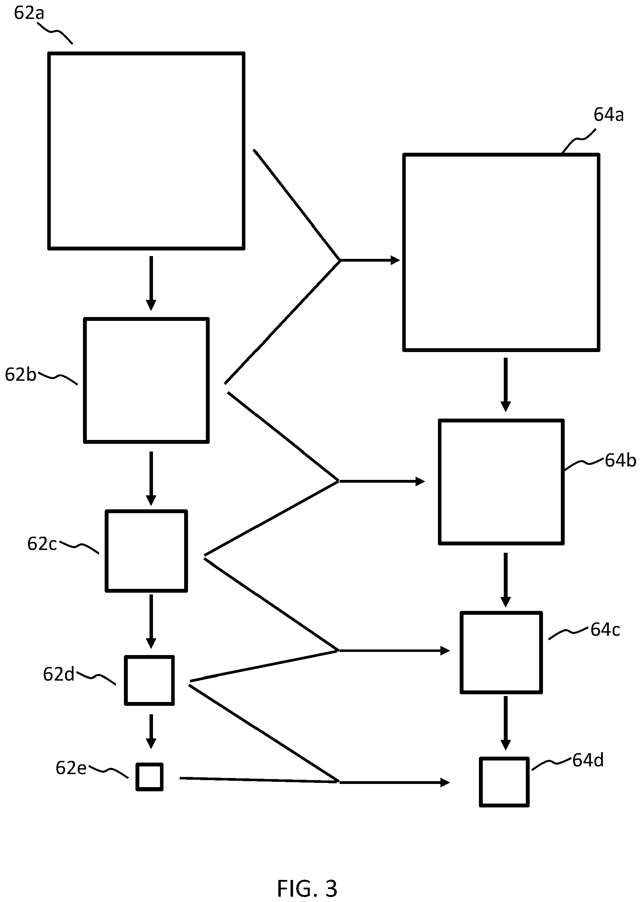

The process of performing the Laplace pyramid decomposition is illustrated schematically in Fig. 3. This shows (left) first performing a Gaussian pyramid deconstruction by recursively downsampling and blurring a starting image 62a to result in a pyramid decomposition formed of a plurality of Gaussian decomposition levels 62a-62e. The top level 62a of the decomposition corresponds to the original image-to-be-enhanced. Subsequently, each neighboring pair of decomposition levels of the Gaussian decomposition are used to form one of the levels of the Laplace pyramid decomposition. The smaller scale level of each neighboring pair of levels is up-sampled to match the scale of the higher scale level of the pair and then the two are subtracted to yield one level of the Laplace pyramid. The resulting set of decomposition levels 64a-64d of the Laplace decomposition are schematically illustrated.

According to a preferred set of embodiments, it is proposed to perform multi-scale decomposition, such as Laplace pyramid decomposition, and to train one or a plurality of artificial neural networks to estimate degradation, e.g. noise, of each of the different levels of the Laplace decomposition. The degradation estimates can then be blended negatively into the original image 64a or into the individual multi-scale decomposition levels, to result in an enhanced image.

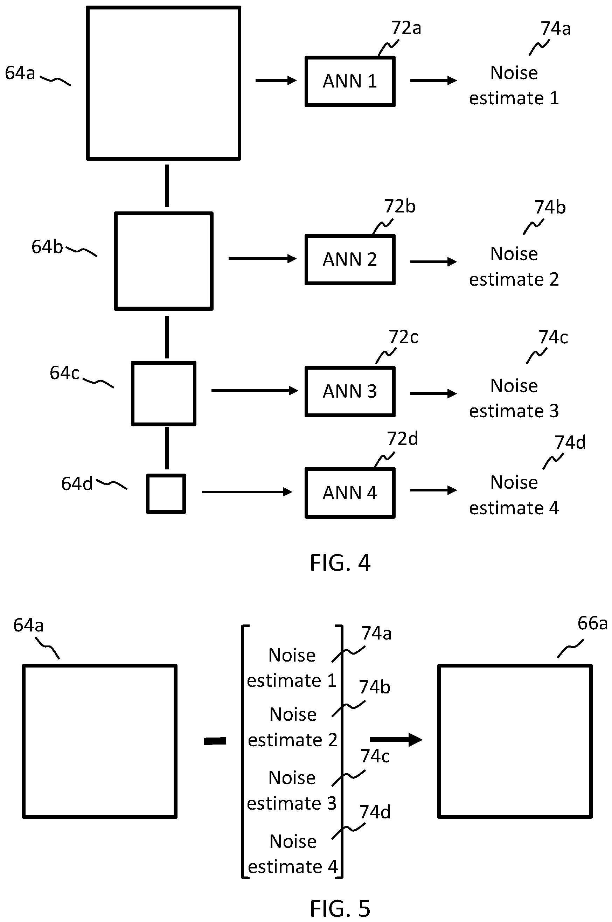

This process is schematically illustrated in Fig. 4 and Fig. 5.

Fig. 4 schematically illustrates an image enhancement method according to one example set of embodiments. In this set of embodiments, a separate respective artificial neural network (ANN) 72a, 72b, 72c, 72d is used for inferring an image degradation component 74 of each different multi-scale decomposition level 64a, 64b, 64c, 64d of an image-to-be-enhanced. The top scale level 64a represents the original image-to-be-enhanced. The decomposition may for example be a Laplace pyramid decomposition, but this is not essential. Each decomposition level may be referred to as a component image 64a, 64b, 64c, 64d. Although four decomposition levels are shown in Fig. 4, more or fewer decomposition levels can be used. As illustrated in Fig. 4, each component image 64 is fed as an input to a separate respective trained artificial neural network (ANN) 72. As will be explained later, each of the plurality of trained neural networks is optimized for inferring an image degradation component of a different specific level of the multi-scale decomposition. An output of each ANN 72 is an estimate of the image degradation 74 for one of the component images 64.

In the illustrated example of Fig. 4, each ANN 72 is trained to estimate a noise of the input component image 64. However, in further embodiments, different kinds of image degradation may additionally or alternatively be estimated by each ANN 72 such as blur.

In the example of Fig. 4, a different dedicated ANN is trained for estimating an image degradation component of images of a different respective scale level of a multiscale decomposition. However, instead, it is also possible to train a single generic ANN for use in estimating an image degradation component of any scale level of a multi-scale decomposition.

As schematically illustrated in Fig. 5, the image degradation estimates 74 are blended negatively into the original image 64a to yield an enhanced image 66a. For example, the image degradation estimates 74 may be combined together and subtracted from the original image 64. The image degradation estimates 74 may be combined in a weighted combination or weighted sum in some examples.

Blending back the image degradation estimates 74 from the different composition levels with different strengths (and potentially at different frequencies) allows for fine-tuning the image enhancement, e.g. as per the preference of a user, and provides for a resulting noise texture more similar to that of an actual higher-dose image.

Instead of subtracting the image degradation estimates 74 from the original image 64a, instead, each image degradation estimate may be subtracted from the respective decomposition level (component image 64) to which it corresponds. This then results in a set of enhanced component images. These enhanced component images can then be reconstructed back into an enhanced image of the same scale size of the original image.

For training of the set of ANNs 72a-72d, each ANN may be trained in a supervised learning procedure using pairs of images, wherein each pair of images includes a first image and a second image, wherein the second image represents an image degradation residuum of the first image. Furthermore, each first image may be a decomposition level of a starting image. Each ANN may be trained using pairs of images in which the first image of the pair is at a same particular decomposition level. In this way, each ANN is trained on images at a particular decomposition level of a multi-scale decomposition.

For example, a training procedure might involve the following.

A first step is to gather training data comprising a set of starting images. These might be referred to as noiseless images.

Each starting image is decomposed using a multi-scale decomposition such as Laplacian pyramid decomposition. This results in, for each starting image, a set of decomposition levels of the starting image. For each decomposition level, a degradation component is synthetically generated. For example, this may comprise applying a polynomial noise generation function, for example a second order polynomial function which operates on each pixel value of the decomposition level image to generate a noise component for that pixel. The result is a noise image for each decomposition level of each starting noiseless image.

Optionally, the level of noise which is generated for each level of the decomposition may be adjusted. Different noise levels can be achieved for example by scaling the noiseless image before applying the noise simulation function.

For example, at each scale/level of the Laplace pyramid, uncorrelated Gaussian noise with zero mean may be added to the image, where the noise variance in each pixel is given by a secondorder polynomial function of the pixel values of that scale/level. In some embodiments, the polynomial coefficients of the polynomial function may be varied depending upon the scale/level of the decomposition. Additionally or alternatively, the polynomial coefficients may be set as a function of characteristics or settings of the imaging system used to acquire the starting images, for example as a function of the detector characteristics with respect to electronic noise, quantum noise, and/or fix-pattern noise.

Optionally, in some embodiments, a frequency split may be performed before decomposing each starting image. For example, a high pass filter may be applied to the starting image before performing the decomposition, such that each decomposition level of the decomposition derives from the high pass filtered part of the starting image.

Following generation of the noise estimates, multiple training data sets are formed, each comprising a plurality of training data image pairs. Each image pair consists of a first image populated by one of the decomposition levels, and a second image comprising the computed degradation image corresponding to that decomposition level.

Each training data set comprises image pairs which include only images of a same single decomposition level, plus the degradation images corresponding thereto.

A separate CNN may then be trained using each separate training data set.

Each resulting trained CNN is optimized for inferring (estimating) a degradation component, e.g. noise component, for a specific decomposition level of a starting image. The first image in each training data image pair is a sample input image, and the second image (the degradation image) is a ground truth image.

As an alternative to the above, after estimating a noise component for each level of the Laplace pyramid decomposition of each starting image, the noise may be blended into the respective level of the decomposition, and subsequently the pyramid decomposition may be reconstructed to form a final degraded image. This yields an image with colored noise, where the noise coloration is realistic. A single training data set might then be formed comprising training image pairs in which a first image of each pair is formed by the original starting image and a second image of each pair is formed by a reconstructed degraded image corresponding to the starting image formed from the process described above. This results in a trained CNN which may be applied to any level of a decomposed image-to-be-enhanced. Alternatively again, once the noise components have been estimated for each level of the decomposition, they may be blended together additively with one another to yield a combined noise image. Subsequently, a CNN may be trained using a training dataset formed of image pairs, wherein a first image of each image pair is formed by a respective starting image, and a second image of each pair is formed by the combined noise image formed from the corresponding starting image.

Although this alternative approach in which a single CNN is trained is a possibility, the approach of Fig. 4 and Fig. 5 in which a separate respective CNN is trained for use with each decomposition level is preferred. This is because a single level-generic CNN has lower performance than use of separately trained CNNs for each level due to the complex statistical properties of the noise, particularly in DXR images (in particular, a high degree of noise correlation).

Although the above-described implementation involves use of a trained neural network, an alternative approach is to use a classical (i.e., not machine learning) algorithm or model to generate the noise estimate for each level of the decomposed image-to-be enhanced. It is also possible to combine certain levels of the pyramid and denoise on the resulting smaller subset of aggregated pyramid levels.

Another approach may comprise using a multi-channel neural network. In this case, the method may comprise feeding the images at the individual levels of the decomposition pyramid to a single noise estimation neural network via different input channels. This may be done at different depths of the network, e.g., immediately after each down-sampling step in a U-Net.

Although in the above-described examples, each of the one or more neural networks is trained to output an estimate of a noise component of the input image, in alternative embodiments, each of the one or more neural networks may be trained to output a denoised version of the input image. In other words, in some embodiments, each neural network is trained to predict denoised images from their noisy counterparts.

In accordance with one or more embodiments, both the training and inference phases may also feature additional domain transforms applied to the images such as conversion of the images to photon count data, high-pass filtering or other operations to facilitate network focus on relevant information (noise, certain structures, etc.).

Although an example application for digital x-ray imaging (DXR imaging) has been discussed above, the approach can be extended to any form of x-ray based images, including fluoroscopy imaging, interventional C-arm imaging (fluoroscopy, angiography, digital subtraction angiography), as well as CT and cone beam CT projections.

In some embodiments, the method may leverage any available interframe information to improve denoising performance e.g., denoising based on the same pyramid level across multiple projections from a fluoroscopy sequence or neighboring projections of a (cone-beam) CT system.

According to one advantageous set of embodiments, the method comprises first applying denoising using a method in accordance with any example or embodiment described above, so as to generate an enhanced image which is a denoised version of the original image, and wherein the method further comprises, subsequent to generating the enhanced image, applying a de-blurring operation. In other words, both denoising and deblurring and applied and wherein the deblurring is applied subsequent to the denoising.

Image quality in x-ray images such as DXR images is influenced by a number of different factors, such as the dose that is applied to produce an image. The dose has a direct impact on the noise level in the acquired images.

There is an inherent resolution loss (blur) associated with any x-ray imaging system due to physical effects arising from the imaging system. The amount and character of the blur varies depending upon a number of factors, including the detector type (contributing to detector blur), and the x-ray tube focal spot shape/size (contributing to source blur).

The blur arising in images can effectively be represented by the point spread function (PSF) of the x-ray imaging system. The PSF is a mathematical function that describes how a system responds to a point source of light or radiation. In the context of x-ray imaging, it characterizes how the imaging system blurs a single point of radiation. The overall PSF of the system can be understood as resulting from a convolution of the respective PSFs that individually result from the different above-mentioned sources of blur.

As a consequence of the inherent resolution loss / blur in x-ray imaging systems, fine image detail may be lost, interfering with timely and correct diagnosis.

A challenge in countering blur in x-ray images is the interaction between blur and noise. One theoretical way to address blur would be to estimate the PSF of the system and apply a deconvolution approach to compensate the system blurring represented by the PSF. However, this approach would be counterproductive since it can be expected to amplify noise in the image and may not adequately capture non-linear characteristics of system blur in digital x-ray imaging.

In view of this, it is proposed in accordance with one set of embodiments of the present invention to first perform de-noising, and subsequently to perform de-blurring, and wherein the deblurring is preferably performed based on use of a trained neural network.

By way of example, the de-noising may be performed using a method in accordance with any of the examples or embodiments described earlier in this disclosure, and the de-blurring may be performed using a further de-blurring procedure. The de-blurring procedure may comprise use of a trained AI model, such as an artificial neural network (ANN). Alternatively, the de-noising might be performed using a de-noising algorithm (e.g. an Al based denoising algorithm, e.g. employing a trained ANN), and the de-blurring might be performed using a method in accordance with any of the examples or embodiments discussed above. Alternatively, each of the denoising and the deblurring might be performed by applying a respective instance of a method in accordance with any example or embodiment outlined above.
Thus, the general approach employed by this set of embodiments may be understood as: first applying a de-noising method to an image-to-be-enhanced to produce a denoised image; and subsequently applying a de-blurring method to the de-noised image.

One example implementation in accordance with this set of embodiments will now be discussed.

In a first step, an image-to-be-enhanced is received. The image is denoised by application of a de-noising procedure. For example, this may be a method in accordance with any embodiment described earlier in this disclosure. This results in a denoised image. Subsequently, a trained deblurring neural network is applied to the denoised image, resulting in an estimate of the image blur. By applying this step after the denoising, this ensures that the image de-blurring/sharpening does not cause amplification of image noise.

In a final step, the blur estimate is blended into the denoised image to yield the final output image. Optionally, the noise estimate produced by the denoising algorithm is also blended into the denoised image.

The blur estimate can be blended into the denoised image with a strength or weighting which is variable and/or with a frequency which is variable. These parameters might be adjustable by a user.

With regards to the aforementioned de-blurring algorithm, this may be a trained neural network, for example a convolutional neural network (CNN). To train the neural network, a training dataset may be used comprising multiple pairs of images, each pair including a first image and a second image, where the first image includes blur, and the second image represents the blur component (the blur residuum) of the first image. In this case, the neural network is trained to output an estimate of a blur component of the input image. Alternatively, the second image might be a de-blurred version of the first image. In this case, the neural network is trained to output an estimate of a deblurred version of the first image.

In either case, in some embodiments, the first image might be generated by artificially applying blur to a starting image using a blur generation algorithm. The blur generation algorithm may model expected blur arising from an x-ray imaging system of a type which is planned to be used, for example, taking into account factors such as focal spot size/shape and detector type/geometry.

Embodiments of the invention described above employ a processing device. The processing device may in general comprise a single processor or a plurality of processors. It may be located in a single containing device, structure or unit, or it may be distributed between a plurality of different devices, structures or units. Reference therefore to the processing device being adapted or configured to perform a particular step or task may correspond to that step or task being performed by any one or more of a plurality of processing components, either alone or in combination. The skilled person will understand how such a distributed processing device can be implemented. The processing device includes a communication module or input/output for receiving data and outputting data to further components.

The one or more processors of the processing device can be implemented in numerous ways, with software and/or hardware, to perform the various functions required. A processor typically employs one or more microprocessors that may be programmed using software (e.g., microcode) to perform the required functions. The processor may be implemented as a combination of dedicated hardware to perform some functions and one or more programmed microprocessors and associated circuitry to perform other functions.

Examples of circuitry that may be employed in various embodiments of the present disclosure include, but are not limited to, conventional microprocessors, application specific integrated circuits (ASICs), and field-programmable gate arrays (FPGAs).

In various implementations, the processor may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

A single processor or other unit may fulfill the functions of several items recited in the claims.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to".

Any reference signs in the claims should not be construed as limiting the scope.

## Claims

1. A method (10) for image enhancement, comprising:
receiving (12) an image-to-be-enhanced;
applying (14) multi-scale image decomposition to the image to yield a set of component images, each component image representing a different decomposition level;
estimate (16) image degradation in each of at least a plurality of the component images;
generate (18) an enhanced image by operating on the original image and/or the component images using the degradation estimations to yield an enhanced version of the original image.

2. The method of claim 1, wherein the multi-scale image decomposition is a Laplace pyramid decomposition.

3. The method of claim 1 or 2, wherein the generating the enhanced image comprises combining the image degradation estimates for the at least plurality of component images and subtracting the combined image degradation estimated from the original image.

4. The method of claim 1 or 2, wherein the generating the enhanced image comprises, for each of at least a subset of the component images, subtracting the corresponding image degradation estimate from the respective component image to yield a set of enhanced component images and reconstructing an enhanced image from the enhanced component images.

5. The method of any preceding claim, wherein the image degradation estimate for each component image comprises an estimate of one or both of image noise and image blur.

6. The method of any preceding claim, wherein the estimating the image degradation of each component image comprises application of a trained neural network.

7. The method of claim 6, wherein the trained neural network is a neural network trained in a supervised learning procedure using pairs of images, wherein each pair of images includes a first image and a second image, wherein the second image represents an image degradation residuum of the first image.

8. The method of claim 7, wherein the image degradation residuum of each second image represents one or both of a noise or blur residuum of the first image.

9. The method of any of claims 6-8, wherein the step of estimating an image degradation of each component image comprises applying to each different component image a different respective trained neural network.

10. The method of any of claims 6-9, wherein, for each pair of images, the second image is generated by a process comprising:
applying multi-scale decomposition to the first image to yield a set of component images of the first image;
applying an image degradation operation to each component image to yield a synthetic image degradation residuum for each component image.

11. The method of any preceding claim, wherein the enhanced image is a denoised image, and wherein the method further comprises, subsequent to generating the enhanced image, applying a deblurring operation.

12. The method of claim 11, wherein the deblurring operation comprises applying a trained neural network to the denoised image.

13. The method of any preceding claim, wherein the images are medical images, and optionally wherein the medical images are x-ray images, for example digital x-ray images, CT images, and/or fluoroscopy images.

14. A computer program product comprising instructions which when executed on a processor, cause the processor to perform a method in accordance with any preceding claims.

15. A processing device (32) comprising one or more processors (36) configured to perform a method in accordance with any of claims 1-13.
